# EUROPEAN PATENT SPECIFICATION

(11) **EP 2 048 036 B1**
(45) Date of publication and mention of the grant of the patent: **06.04.2011**
(21) Application number: 08017657.1
(22) Date of filing: 08.10.2008
(51) Int. Cl.: B60R 13/04, B60J 5/04, B60R 16/02

(54) **Vehicle side structure**
Fahrzeugseitenstruktur
Structure latérale de véhicule

(30) Priority: 10.10.2007 JP 2007264245
(43) Date of publication of application: 15.04.2009
(73) Proprietor: Nissan Motor Co., Ltd., Kanagawa 221-0023 (JP)
(72) Inventor: Kudou, Nobumichi, Atsugi-shi Kanagawa 243-0123 (JP)
(74) Representative: Grünecker, Kinkeldey, Stockmair & Schwanhäusser Anwaltssozietät

(56) References cited:
- US-A- 3 053 564
- US-B1- 7 244 894

## Description

### BACKGROUND OF THE INVENTION

### Field of the Invention

The present invention relates to a vehicle side structure.

### Description of the Related Art

There are vehicles of a type whose vehicle side section includes: a side door; a door frame in which the side door is installed; a hinge, provided at a front edge portion of the door frame, for rotatably supporting the side door; and a fender panel constituting a part of the front edge portion of the door frame, and located in front of the side door.

Japanese Utility Model Application Publication No. 4-19347 discloses a structure in which a side protector molding is attached to a lower portion of the side door. By use of the side protector molding, this structure is capable of preventing an outer panel of the side door from being damaged by a flying stone or the like.

### SUMMARY OF THE INVENTION

In the foregoing structure, however, the fender panel is damaged if the flying stone hits the fender panel. In addition, in a case where a damaged fender panel is replaced with a new one, the entire fender panel has to be replaced. This replacement work requires much labor.

In addition, there are vehicles of another type whose side door is locked to, and unlocked from, the door frame by use of a lock system including an electric actuator. The electric actuator is arranged in the side door, and is connected, through a harness, to a control unit arranged outside the side door. The electric actuator unlocks the side door from the door frame when receiving a door-unlock signal transmitted from the control unit. In this structure, the harness extends from the control unit through the inside of the vehicle body, penetrates a front edge portion of the door frame, passes an interstice between a front edge portion of the side door and the front edge portion of the door frame, penetrates the front edge portion of the side door, and is installed inside the front side door. In other words, in the interstice between the front edge portion of the side door and the front edge portion of the door frame, a part of the harness is exposed to the exterior of the vehicle.

If a burglar unlawfully accesses the part of the harness which is exposed to the exterior of the vehicle in the interstice between the front edge portion of the side door and the front edge portion of the door frame and thus inputs an unlawful unlock signal through the harness into the electric actuator, it is likely that the side door may be unlocked. In addition to the foregoing harness, another harness or the like for transmitting a signal for opening and closing (lowering and raising) the window glass of the side door passes the interstice between the front edge portion of the side door and the front edge portion of the door frame. Accordingly, the window glass may be opened if a burglar unlawfully accesses this harness.

With the foregoing problems taken into consideration, an object of the present invention is to provide a vehicle side structure capable of preventing the fender panel from being damaged by a flying stone or the like, and capable of blocking the harness located in the interstice between the side door and the door frame from access from the outside of the vehicle.

An aspect of the present invention is a vehicle side structure comprising: a door frame provided to a vehicle side body; a side door located inside the door frame, having an end portion in a vehicle longitudinal direction hinged to the door frame; a harness extending through the end portion of the side door and the door frame, including a part located between the end portion of the side door and the door frame; a fender panel provided at a location opposed in the vehicle longitudinal direction to the end portion of the side door, and arranged continuously in the vehicle longitudinal direction with the door frame, the fender panel having an outer side surface and a surface opposed to the side door; a fender cover including a cover main body which covers the outer side surface at a lower portion of the fender panel, and a protector portion which covers the surface opposed to the side door at the lower portion of the fender panel, the protector portion constituting a part of the door frame and blocking off the cover main body and the part of the harness located between the end portion of the side door and the door frame from each other; a first fixing structure for fixing the cover main body to the fender panel; and a second fixing structure for fixing the protector portion to the fender panel.

### BRIEF DESCRIPTION OF THE DRAWINGS

The invention will now be described with reference to the accompanying drawings wherein:
Fig. 1 is a side view showing a vehicle front section including a vehicle side structure according to a first embodiment of the present invention.
Fig. 2 is a cross-sectional view of the vehicle front section taken along the II-II line of Fig. 1.
Fig. 3 is a perspective view showing a vehicle side body according to the first embodiment of the present invention. An illustration of a front side door is omitted from Fig. 3.
Fig. 4 is a perspective view showing a front lower part of a door frame according to the first embodiment of the present invention with a fender cover being removed from the door frame.
Fig. 5 is a perspective view showing the front lower part of the door frame according to the first embodiment of the present invention with the fender cover being mounted onto the door frame.
Fig. 6 is an exploded, perspective view showing the fender cover according to the first embodiment of the present invention.
Fig. 7 is a perspective view showing a fender panel according to the first embodiment of the present invention with the fender cover being removed from the fender panel.
Fig. 8 is a perspective view showing the front lower part of the door frame according to the first embodiment of the present invention with a cover main body being removed from the door frame.
Fig. 9 is a cross-sectional view of the front lower part of the door frame taken along the IX-IX line of Fig. 8.
Fig. 10 is a horizontal cross-sectional view showing a vehicle side structure according to a second embodiment of the present invention.

### DETAIL DESCRIPTION OF THE PREFERRED EMBODIMENTS

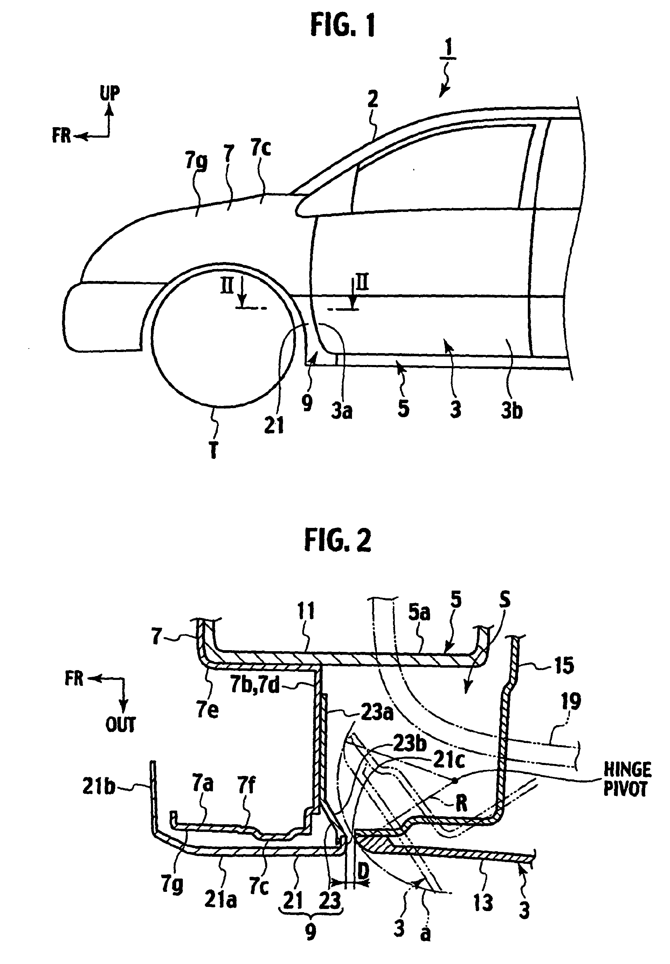

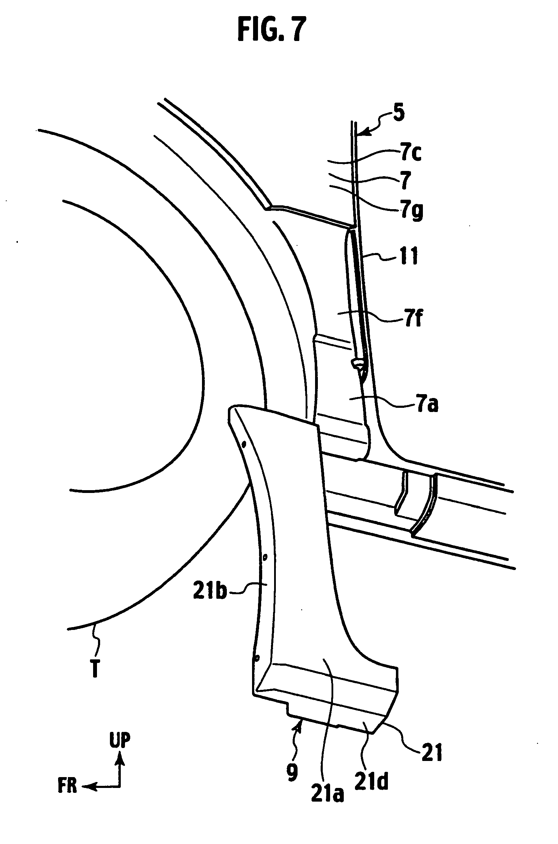

Descriptions will be provided for a first embodiment of the present invention on the basis of Figs. 1 to 9. Note that, in the drawings, "FR" means "forward in the vehicle longitudinal direction, " "UP" means "upward of the vehicle, " and "OUT" means "outward in the vehicle width direction." Note that Fig. 2 also illustrates positions of a door frame 5 and a harness 19 for convenience in description.

As shown in Figs. 1 to 3, a vehicle side structure 1 includes: a front side door 3 as a side door provided to a side section of a vehicle body 2; the door frame 5 on which the front side door 3 is mounted; a front fender panel 7 as a fender panel arranged in front of the front side door 3; and a fender cover 9 for covering a rear lower part 7a of the front fender panel 7.

The door frame 5 includes a body side panel 11, a rear part 7b of the front fender panel 7, and a fender cover 9. The door frame 5 is formed in a closed loop shape along the periphery of the front side door 3.

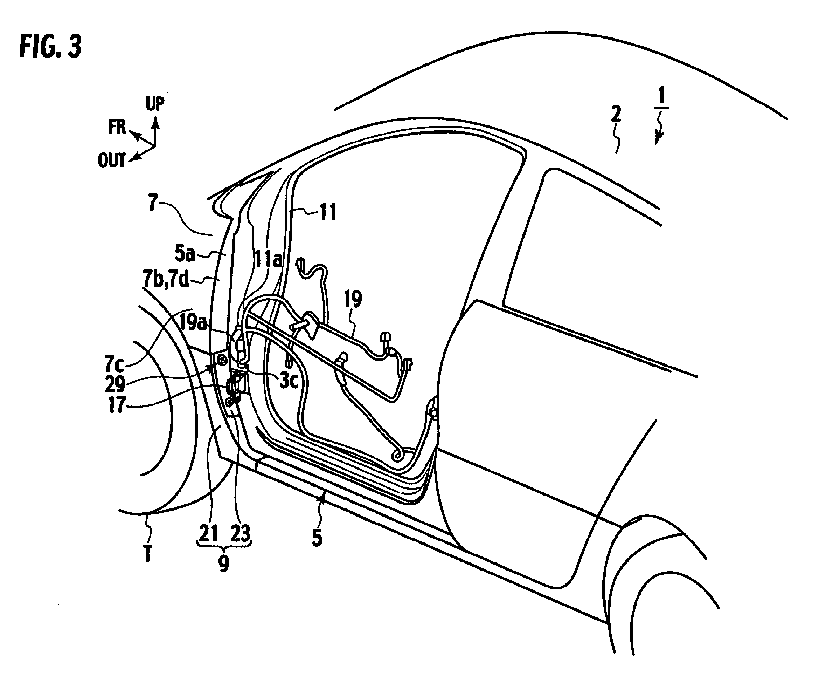

As shown in Fig. 2, the front side door 3 includes a door outer panel 13 and a door inner panel 15, parts of which are overlapped and joined to each other. A front part 3a is one of parts (a front part 3a and a rear part 3b) of the front side door 3 which are located at ends in the vehicle longitudinal direction of the front side door 3. The front side door 3 is openably and closably connected at the front part 3a to a front portion of the door frame 5 with a hinge 17 shown in Fig. 3. The front side door 3 is located inside the door frame 5 when the front side door 3 is in closed state. The hinge 17 supports the front side door 3 rotatably in the vehicle width direction (about a substantially vertical pivot shaft of the hinge 17). The hinge 17 is fixed to the body side panel 11 in a position closer to the outermost side of the body side panel 11 in the vehicle width direction. Specifically, the hinge 17 is arranged in a lower portion of a front part 5a of the door frame 5. The hinge 17 is arranged there in a way that its pivot shaft is situated closer to the outermost side of the body side panel 11. This arrangement makes it possible to reduce the turning radius R with which the front edge of the front side door 3 turns to the minimum.

The front side door 3 is locked to, and unlocked from, the door frame 5 with a lock system (not illustrated) including an electric actuator. The electric actuator is connected to a controller (not illustrated) arranged in the vehicle body 2 outside the front side door 3 through a harness 19 shown in Fig. 3. When an unlocking operation is performed by an operation button (not illustrated), the controller transmits an unlock signal to the electric actuator through the harness 19. Once receiving the unlock signal, the electric actuator unlocks the front side door 3 from the door frame 5.

The electric actuator of the lock system, to which an end portion of the harness 19 is connected, is placed in the front side door 3. To this end, the harness 19 is laid out in the following manner: starts from the controller; is arranged inside of the vehicle body; penetrates the front part 5a of the door frame 5; passes an interstice S between the front part 3a of the front side door 3 and the front part 5a of the front side door 5; penetrates the front part 3a which is an edge portion of the front side door 3 close to the hinge 17; and is installed inside of the front side door 3. More specifically, the harness 19 passes through a harness through-hole 11a formed in the body side panel 11 and facing outward in the vehicle width direction, and a harness through-hole 3c formed in the front side door 3 and facing frontward. In other words, the harness 19 extends across the front part 3a of the front side door 3 and the door frame 5, and a part of the harness 19 is located in the interstice S formed between the front part 3a of the front side door 3 and the front part 5a of the door frame 5 (see Fig. 2). In the present embodiment, as shown in Fig. 3, a part 19a of the harness 19 which is located between the front part 3a of the front side door 3 and the front part 5a of the door frame 5 is arranged above the hinge 17 and in a vicinity of the hinge 17. When the front side door 3 opens and closes, a portion of the front side door 3 which is connected to the hinge (which is located in a vicinity of the pivot shaft of the hinge 17) moves least out of the portions of the front side door 3. For this reason, the laying of the harness 19 in the vicinity of the hinge 17 makes it possible to shorten the total length of the harness 19.

As shown in Figs. 1 and 2, the front fender panel 7 is provided at a location opposed, in the vehicle longitudinal direction, to the front part 3a of the front side door 3, that is, in front of the front part 3a. The front fender panel 7 is arranged continuously with the door frame 5 in the vehicle longitudinal direction, and covers a front wheel tire T. The front fender panel 7 includes: an outer sidewall 7c which is located outer side in the vehicle width direction; a rear side wall 7d extending inward in the vehicle width direction from a rear edge of the outer sidewall 7c; and an inner wall 7e extending frontward from an edge of the rear side wall 7d, which is located inner side in the vehicle width direction. The inner wall 7e is fixed to the body side panel 11 by welding. The rear side wall 7d constitutes a part of the front part 5a of the door frame 5.

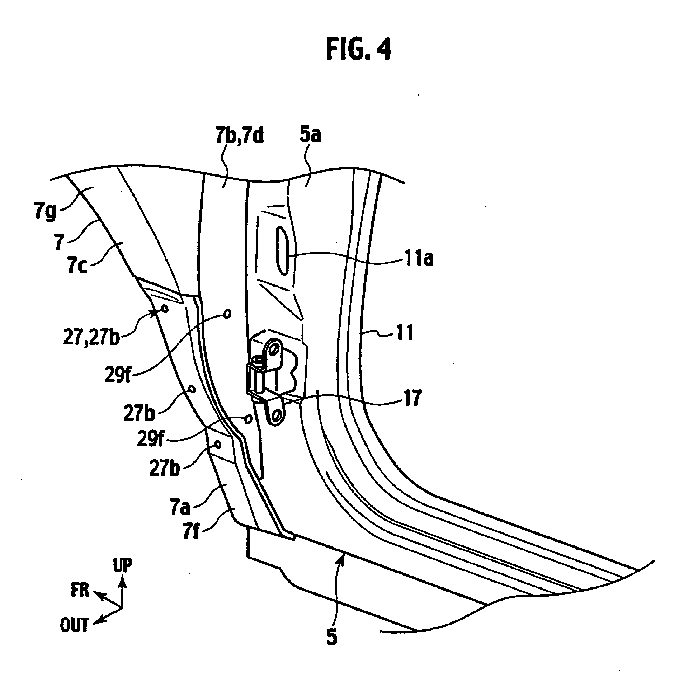

As shown in Fig. 4, a cover-mounted part 7f to be covered by the fender cover 9 is formed in a rear lower part 7a of the front fender panel 7. Out of the portions of an outer side surface 7g of the front fender panel 7, a portion which is not covered by the fender cover 9 constitutes a vehicle exterior surface (a design surface). On the other hand, out of the portions of the outer side surface 7g, a portion serving as the cover-mounted part 7f to be covered by the fender cover 9 does not constitute the vehicle exterior surface, because the fender cover 9 constitutes the vehicle exterior surface (the design surface).

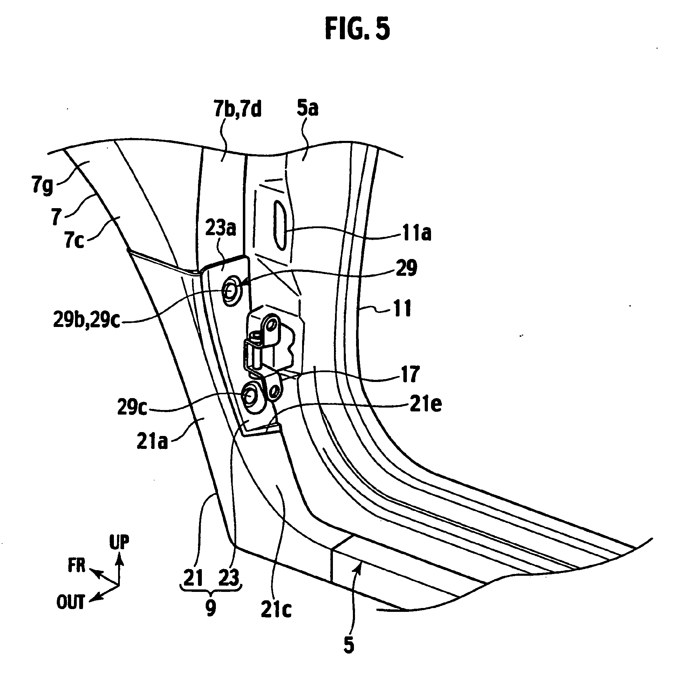

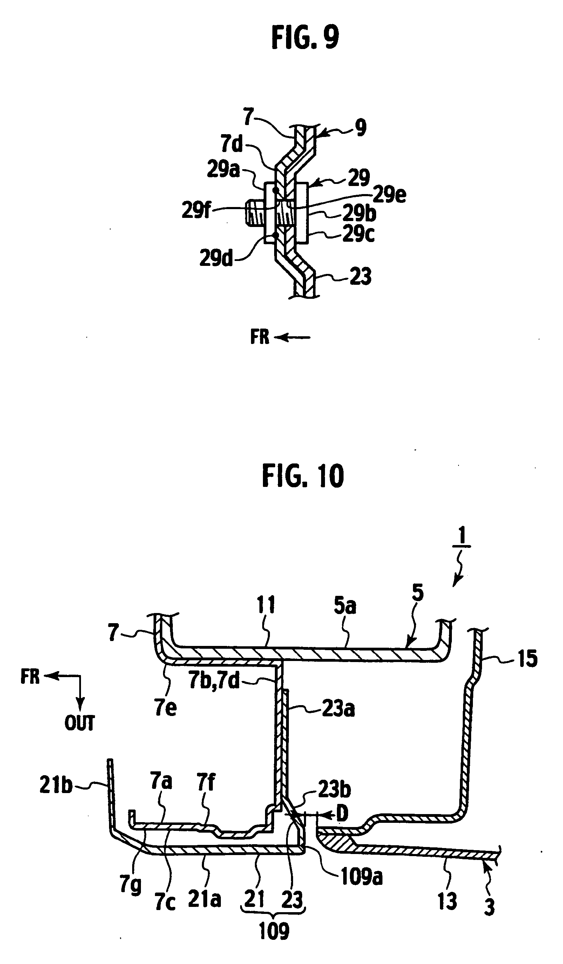

As shown in Figs. 5 and 9, the fender cover 9 includes a resin-made cover main body 21 and a resin-made protector portion 23. The cover main body 21 and the protector portion 23 are discrete components, and are connected together by a resin-made joint part 25.

The cover main body 21 covers the outer side surface 7g at a lower portion of the front fender panel 7, and constitutes the vehicle exterior surface. Specifically, the cover main body 21 includes: a sidewall 21a for covering the outer side surface 7g of the cover mounting part 7f of the front fender panel 7; a front wall 21b extending inward in the vehicle width direction from the front part of the sidewall 21a; a rear side wall 21c extending inward in the vehicle width direction from the rear part of the sidewall 21a; and a bottom wall 21d which is located at the bottom part of the cover main body 21, and is continuous with the sidewall 21a and the front wall 21b. A notch part 21e to which the protector portion 23 is attached is formed in the rear side wall 21c. When the front side door 3 is closed, the outer side surface of the sidewall 21a of the cover main body 21 and the outer side surface of the front side door 3 are almost located on the same plane.

The protector portion 23 covers a rear side surface of the rear side wall 7d at a lower portion of the front fender panel 7, the rear side surface being opposed to the front side door 3. The protector portion 23 thus constitutes a part of the door frame 5 which is opposed to the front side door 3. Specifically, the protector portion 23 is located frontward of the hinge 17, and is opposed to the hinge 17. The protector portion 23 includes: a base wall portion 23a which extends almost parallel to the vehicle width direction, and which is in intimate contact with and fixed to the rear side surface of the rear side wall 7d of the front fender panel 7; an inclined wall portion 23b which extends from an outer edge in the vehicle width direction of the base wall portion 23a toward the front edge of the front side door 3 that is in closed state, and which is connected at its outer rear edge to a rear edge of the sidewall 21a of the cover main body 21. The door frame 5 including the protector portion 23 and the front part of the door inner panel 15 cooperate to define a space S between the front part 3a of the front side door 3 and the front part 5a of the door frame 5 (see Fig. 2). In other words, the inclined wall 23b is located between the cover main body 21 and the harness 19 and is provided in such a way as to block off the cover main body 21 and the harness 19 from each other. As shown in Fig. 2, the protector portion 23 shaped in such a form is located outside a turning locus "a" of the front edge of the front side door 3.

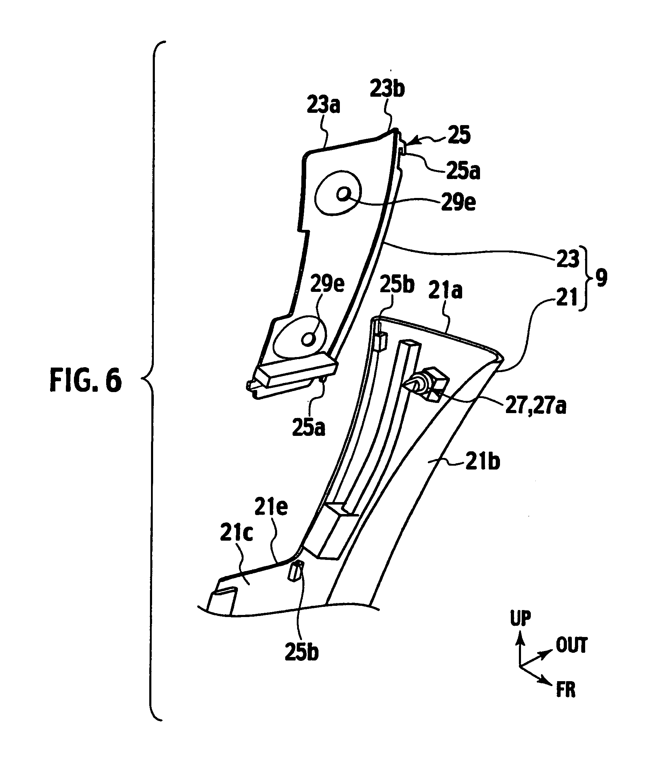

As shown in Fig. 6, the joint part 25 is constituted of a pair of engaging claws 25a respectively provided in upper and lower portions of an outer edge in the vehicle width direction of the protector portion 23; and a pair of upper and lower first engaging holes 25b which are provided on the periphery of the notch part 21e in the rear side wall 21c of the cover main body 21, at locations corresponding to the engaging claws 25a. The engaging claws 25a engage with the respective first engaging holes 25b.

The fender cover 9 with such a configuration is attached to the front fender panel 7 with the cover main body 21 and the protector portion 23 being connected to each other by the joint part 25.

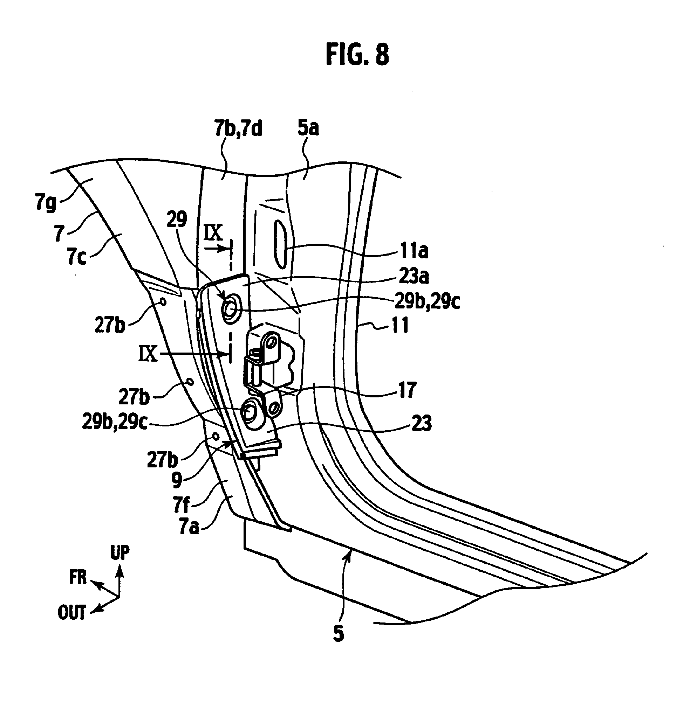

As shown in Figs. 6 and 8, the cover main body 21 is fixed to the front fender panel 7 with a first fixing structure 27. The first fixing structure 27 consists of: multiple clips 27a formed in the rear side surface of the sidewall 21a of the cover main body 21 (only one clip being illustrated out of the multiple clips in Fig. 6) ; and multiple second engaging holes 27b which are provided in the front fender panel 7, and into which the clips 27a are locked.

As shown in Fig. 8 and 9, the protector portion 23 is fixed to the front fender panel 7 with a second fixing structure 29. The second fixing structure 29 consists of: a nut 29a which is integrally provided to the fender panel as a female screw member; and a bolt 29c, as a male screw member, which is screwed into the nut 29a with a head 29b of the bolt 29c being located between the base wall portion 23a of the protector portion 23 and the front end portion of the door inner panel 15 of the front side door 3 (with the head 29b of the bold 29c being located in the space S). The nut 29a is fixed to a front side surface of the rear side wall 7d of the front fender panel 7 by welding 29d. The bolt 29c is screwed into the nut 29a through a first bolt insertion hole 29e formed in the protector portion 23 and a second bolt insertion hole 29f formed in the front fender panel 7. With the bolt 29c and the nut 29a, the protector portion 23 is fastened to the front fender panel 7. In the present embodiment, the joint part 25 is formed in such a way as to be more vulnerable than the second fixing structure 29.

In the above-described vehicle side structure 1 according to the present embodiment, the fender cover 9 covers the front fender panel 7. For this reason, by use of the fender cover 9, the vehicle side structure 1 according to the present embodiment makes it possible to prevent the front fender panel 7 from being damaged by a flying stone and the like.

In addition, in the vehicle side structure 1 according to the present invention, the fender cover 9 includes: the cover main body 21; and the protector portion 23 which blocks off the cover main body 21 and the harness 19 from each other. For this reason, even if a burglar unlawfully detaches the cover main body 21 from front fender panel 7 by unfastening the first fixing structure 27, the protector portion 23 which constitutes a part of the door frame 5, and which blocks off the cover main body 21 and the harness 19 from each other, is still fixed to the front fender panel 7 by the second fixing structure 29. This makes it possible to prevent a gap D between the door frame 5 and the front side door 3 from being widened. Consequently, the vehicle side structure 1 according to the present embodiment makes it possible to block the harness 19 located between the front side door 3 and the door frame 5 from access from the outside of the vehicle, and accordingly to prevent the vehicle from being stolen.

Furthermore, the vehicle side structure 1 according to the present embodiment makes it necessary to unfasten the second fixing structure 29 to detach the protector portion 23 from the front fender panel 7. For this reason, it takes a longer time to detach the protector portion 23 from the front fender panel 7. Consequently, the vehicle side structure 1 according to the present embodiment makes it possible to force a burglar to spend a longer time when the burglar intends to unlawfully access the harness 19, and accordingly to prevent the burglar from continuing the unlawful act.

Moreover, in vehicle side structure 1 according to the present embodiment, the protector portion 23 and a cover main body 21 are the discrete components, and are connected to each other by the joint part 25. For this reason, disconnection of the joint part 25 enables a user to replace the cover main body 21 with a new one without detaching the protector portion 23. This makes replacement of the cover main body 21 with a new one easier. On the other hand, in a case where a burglar pulls the cover main body 21 by force to detach the fender cover 9 by unfastening the first fixing structure 27, the joint part 25 breaks, and only the cover main body 21 comes off. Meanwhile, the second fixing structure 29 still keeps the protector portion 23 fixed to the front fender panel 7. This makes it possible to prevent the gap D between the door frame 5 and the front side door 3 from being widened, and accordingly to block the harness 19 located between the front side door 3 and the door frame 5 from access from the outside of the vehicle. In other words, in the vehicle side structure 1 according to the present embodiment, the easy replacement of the cover main body 21 is made possible while blocking the harness 19 from access from the outside of the vehicle.

Additionally, in the vehicle side structure 1 according to the present embodiment, the protector portion 23 and the cover main body 21 are connected to each other by the joint part 25. This makes it possible to increase the positioning accuracy of the protector portion 23, and accordingly to prevent the protector portion 23 and the front side door 3 from interfering with each other.

In addition, in the vehicle side structure 1 according to the present embodiment, the second fixing structure 29 includes: the nut 29a, as a female screw member, which is fixed to the front fender panel 7; and the bolt 29c, as a male screw member, which is screwed into the nut 29a with the head 29b of the bolt 29c being located between the protector portion 23 and the front side door 23. For this reason, the vehicle side structure 1 according to the present embodiment makes it possible to block the head 29b of the bolt 29c from access, and accordingly to prevent the protector portion 23 from being detached unlawfully.

Furthermore, in the vehicle side structure 1 according to the present embodiment, the harness 19 is laid in the vicinity of the hinge 17. Moreover, the protector portion 23 is located frontward of the hinge 17 in the vehicle forward direction, and is opposed to the hinge 17. For this reason, by use of the protector portion 23, the vehicle side structure 1 according to the present embodiment makes it possible to more effectively block the harness 19 from the unlawful access.

In addition, in the vehicle side structure 1 according to the present embodiment, both the cover main body 21 and the protector portion 23 of the fender cover 9 are made of the resin. This makes the texture of the fender cover 9 as a whole consistent. For this reason, the vehicle side structure 1 according to the present embodiment makes it possible to improve the outward appearance of the fender cover 9. Furthermore, because the protector portion 23 is made of the resin, it is possible to prevent the front side door 3 from being damaged even in a case where the front side door 3 interferes with the protector portion 23 due to its looseness.

Next, descriptions will be provided for a second embodiment of the present invention on the basis of Fig. 10. Fig. 10 is a horizontal cross-sectional view showing a vehicle side structure according to the present embodiment. Note that components which are the same as those of the first embodiment will be denoted by the same reference numerals, and the descriptions for such components will be omitted.

The present embodiment is different from the first embodiment with respect to a fender cover 109 in the vehicle side structure 1. The fender cover 109 according to the present embodiment is made of a resin, and the protector portion 23 and the cover main body 21 are integrally formed with a vulnerable part 109a in between. The vulnerable part 109a is more vulnerable than the second fixing structure 29. The vulnerable part 109a is a groove formed between the protector portion 23 and the cover main body 21.

If a burglar pulls the cover main body 21 by force to detach the fender cover 109 by unfastening the first fixing structure 27, this configuration causes the vulnerable part 109a to break, and allows only the cover main body 21 to come off. Meanwhile, the protector portion 23 is still fixed to the front fender panel 7 by the second fixing structure 29. For this reason, the vehicle side structure 1 according to the present embodiment makes it possible to prevent the gap D between the door frame 5 and the front side door 3 from being widened, and accordingly to block the harness 19 located between the front side door 3 and the door frame 5 from access from the outside of the vehicle.

The preferred embodiments described herein are illustrative and not restrictive, and the invention may be practiced or embodied in other ways without departing from the scope of the present invention. For example, the harness 19 is not limited to that for locking and unlocking the front side door 3. The harness 19 may be any other harness provided to the vehicle, such as a harness of wiring for opening and closing (lowering and raising) the window glass (not illustrated) of the front side door 3. In this case, too, the vehicle side structure 1 according to the present invention makes it possible to block the harness from an unlawful access by use of the protector portion 23.

In addition, two hinges 17 may be provided in upper and lower locations, respectively. In this case, the protector portion 23 may be arranged, for example, between the two hinges.

Moreover, a rear side door whose rear edge portion is rotatably supported by a hinge may be adopted as the side door, and a rear fender panel may be adopted as the fender panel.

Furthermore, the female screw member is not limited to the nut 29a. The female screw member may be achieved by forming a female screw in the inner peripheral surface of the second bolt insertion hole 29f in the fender panel 7. Even in this structure, the female screw as the female screw member is integrally formed in the fender panel. Additionally, the male screw member is not limited to the bolt 29c. The male screw member may be any other screw as long as the screw has its head.

## Claims

1. A vehicle side structure (1) comprising:
a door frame (5) provided to a vehicle side body;
a side door (3) located inside the door frame (5), having an end portion (3a) in a vehicle longitudinal direction hinged to the door frame (5);
a harness (19) extending through the end portion (3a) of the side door (3) and the door frame (5), including a part located between the end portion (3a) of the side door (3) and the door frame (5);
a fender panel (7) provided at a location opposed in the vehicle longitudinal direction to the end portion (3a) of the side door (3), and arranged continuously in the vehicle longitudinal direction with the door frame (5), the fender panel (7) having an outer side surface (7g) and a surface opposed to the side door (3) :
a fender cover (9, 109) including a cover main body (21) which covers the outer side surface (7g) at a lower portion of the fender panel (7), and a protector portion (23) which covers the surface opposed to the side door (3) at the lower portion of the fender panel (7), the protector portion (23) constituting a part of the door frame (5) and blocking off the cover main body (21) and the part of the harness (19) located between the end portion (3a) of the side door (3) and the door frame (5) from each other;
a first fixing structure (27) for fixing the cover main body (21) to the fender panel (7); and
a second fixing structure (29) for fixing the protector portion (23) to the fender panel (7).

2. The vehicle side structure (1) according to claim 1, wherein
the protector portion (23) and the cover main body (21) are discrete components,
the protector portion (23) and the cover main body (21) are connected to each other by a joint part (25) which is more vulnerable than the second fixing structure (29).

3. The vehicle side structure (1) according to claim 1, wherein
the protector portion (23) and the cover main body (21) are integrally formed with a vulnerable part (109a) in between, the vulnerable part (109a) being more vulnerable than the second fixing structure (29).

4. The vehicle side structure (1) according to any one of claims 1 to 3, wherein
the second fixing structure (29) includes a female screw member (29a) and a male screw member (29c), the female screw member (29a) being provided integrally with the fender panel (7), and the male screw member (29c) being screwed into the female screw member (29a) with a head (29b) of the male screw member (29c) being located between the protector portion (23) and the side door (3).

## Patentansprüche

1. Fahrzeugseitenstruktur (1), aufweisend:
einen Türrahmen (5), vorgesehen an einer Fahrzeugseitenkarosserie;
eine Seitentür (3), angeordnet innerhalb des Türrahmens (5) mit einem Endabschnitt (3a) in einer Längsrichtung des Fahrzeuges, gelenkverbunden mit dem Türrahmen (5);
einen Kabelbaum (19), der sich durch den Endabschnitt (3a) der Seitentür (3) und dem Türrahmen (5) erstreckt, enthaltend ein Teil, angeordnet zwischen dem Endabschnitt (3a) der Seitentür (3) und dem Türrahmen (5);
ein Schutzblechpanel (7), vorgesehen an einem Ort, gegenüberliegend in der Längsrichtung des Fahrzeuges zu dem Endabschnitt (3a) der Seitentür (3) und fortlaufend angeordnet in der Längsrichtung des Fahrzeuges mit dem Türrahmen (5), wobei das Schutzblechpanel (7) eine äußere Seitenoberfläche (7g) und eine zu der Seitentür (3) gegenüberliegende Oberfläche hat;
eine Schutzblechabdeckung (9, 109), die einen Abdeckungshauptkörper (21) enthält, der die äußere Seitenoberfläche (7g) an einem unteren Abschnitt des Schutzblechpanels (7) abdeckt, und einen Schutzabschnitt (23), der die Oberfläche, gegenüberliegend zu der Seitentür (3) an dem unteren Abschnitt des Schutzblechpanels (7) abdeckt, wobei der Schutzabschnitt (23) einen Teil des Türrahmens (5) bildet und den Abdeckungshauptkörper (21) und den Teil des Kabelbaums (19), angeordnet zwischen dem Endabschnitt (3a) der Seitentür (3) und dem Türrahmen (5), voneinander abblockt;
einen ersten Befestigungsaufbau (27) zum Befestigen des Abdeckungshauptkörpers (21) an dem Schutzblechpanel (7); und
einen zweiten Befestigungsaufbau (29) zum Befestigen des Schutzabschnittes (23) an dem Schutzblechpanel (7).

2. Fahrzeugseitenstruktur (1) nach Anspruch 1,
wobei
der Schutzabschnitt (23) und der Abdeckungshauptkörper (21) getrennte Bauteile sind,
der Schutzabschnitt (23) und der Abdeckungshauptkörper (21) miteinander durch ein Verbindungsteil (25), das angreifbarer als der zweite Befestigungsaufbau (29) ist, verbunden sind.

3. Fahrzeugseitenstruktur (1) nach Anspruch 1,
wobei
der Schutzabschnitt (23) und der Abdeckungshauptkörper (21) einstückig mit einem dazwischen befindlichen angreifbaren Teil (109a) gebildet sind, wobei das angreifbare Teil (109a) angreifbarer als der zweite Befestigungsaufbau (29) ist.

4. Fahrzeugseitenstruktur (1) nach einem der Ansprüche 1 bis 3, wobei
der zweite Befestigungsaufbau (29) ein Innengewindeteil (29a) und ein Außengewindeteil (29c) enthält, wobei das Innengewindeteil (29a) einstückig mit dem Schutzblechpanel (7) vorgesehen ist und das Außengewindeteil (29c) in das Innengewindeteil (29a) verschraubt ist, mit einem Kopf (29b) des Außengewindeteils(29c), angeordnet zwischen dem Schutzabschnitt (23) und der Seitentür (3).

## Revendications

1. Structure latérale de véhicule (1) comprenant :
un cadre de porte (5) prévu sur un corps latéral de véhicule ;
une porte latérale (3) située dans le cadre de porte (5) ayant une partie d'extrémité (3a) dans une direction longitudinale du véhicule articulée au cadre de porte (5) ;
un harnais (19) s'étendant au travers de la partie d'extrémité (3a) de la porte latérale (3) et du cadre de porte (5), comportant une partie située entre la partie d'extrémité (3a) de la porte latérale (3) et le cadre de porte (5) ;
un panneau de compartiment d'aile (7) prévu à un endroit opposé dans la direction longitudinale du véhicule à la partie d'extrémité (3a) de la porte latérale (3) et disposé en continu dans la direction longitudinale du véhicule avec le cadre de porte (5), le panneau de compartiment d'aile (7) ayant une surface latérale extérieure (7g) et une surface opposée à la porte latérale (3) ;
un protège-aile (9, 109) incluant un corps principal (21) qui recouvre la surface latérale extérieure (7g) sur une partie inférieure du panneau de compartiment d'aile (7), et une partie protectrice (23) qui recouvre la surface opposée à la porte latérale (3) sur la partie inférieure du panneau de compartiment d'aile (7), la partie protectrice (23) constituant une partie du cadre de porte (5) et bloquant le corps principal (21) et la partie du harnais (19) située entre la partie d'extrémité (3a) de la porte latérale (3) et le cadre de porte (5) l'un par rapport à l'autre ;
une première structure de fixation (27) pour la fixation du corps principal (21) au panneau de compartiment d'aile (7) ; et
une seconde structure de fixation (29) pour la fixation de la partie protectrice (23) au panneau de compartiment d'aile (7).

2. Structure latérale de véhicule (1) selon la revendication 1, dans laquelle
la partie protectrice (23) et le corps principal (21) sont des composants discrets,
la partie protectrice (23) et le corps principal (21) sont reliés l'un à l'autre par une partie de jointure (25) qui est plus vulnérable que la seconde structure de fixation (29).

3. Structure latérale de véhicule (1) selon la revendication 1, dans laquelle
la partie protectrice (23) et le corps principal (21) sont intégralement formés avec une partie vulnérable (109a) au milieu, la partie vulnérable (109a) étant plus vulnérable que la seconde structure de fixation (29).

4. Structure latérale de véhicule (1) selon l'une quelconque des revendications 1 à 3, dans laquelle
la seconde structure de fixation (29) inclut un élément de vis femelle (29a) et un élément de vis mâle (29c), l'élément de vis femelle (29a) étant prévu intégralement avec le panneau de compartiment d'aile (7), et l'élément de vis mâle (29c) étant vissé dans l'élément de vis femelle (29a) avec une tête (29b) de l'élément de vis mâle (29c) située entre la partie protectrice (23) et la porte latérale (3).
